# EUROPEAN PATENT SPECIFICATION

(11) **EP 3 827 725 B1**
(45) Date of publication and mention of the grant of the patent: **29.11.2023**
(21) Application number: 20167968.5
(22) Date of filing: 03.04.2020
(51) Int. Cl.: A47L 9/00, A47L 11/24

(54) **SWEEPING ROBOT**
KEHRROBOTER
ROBOT DE BALAYAGE

(30) Priority: 28.11.2019 CN 201911219787
(43) Date of publication of application: 02.06.2021
(73) Proprietor: Pure H2B Co., Ltd., Shenzhen Guangdong 518100 (CN)
(72) Inventor: LI, Jianquan, Shenzhen, Guangdong 518100 (CN); ZHAO, Yuyun, Shenzhen, Guangdong 518100 (CN); WANG, Zheng, Shenzhen, Guangdong 518100 (CN)
(74) Representative: Michalski Hüttermann & Partner Patentanwälte mbB

(56) References cited:
- CN-A- 109 044 212
- CN-A- 110 353 580
- CN-U- 208 799 168
- US-B1- 9 192 274

## Description

### TECHNICAL FIELD

The present disclosure relates to the technical filed of cleaning machinery, in particular to a sweeping robot.

### BACKGROUND

With the development of sweeping robot technology, people have a growing tendency to sweep the floor by a sweeping robot instead of labor.

CN 208 799 168 U refers to a sweeping robot cleaner.

CN 110 353 580 A refers to a floor wiping robot.

US 9 192 274 B1 refers to a Floor wiping mechanism for self-propelled floor cleaner.

CN 109 044 212 A refers to a floor wiping robot with automatic replacing and automatic rolling functions.

During the process of mopping the floor, for the existing sweeping robot, people need to frequently disassemble the rag, sweep the rag, air the rag and assemble the rag. The whole process is tedious and time-consuming, decreasing the usage experience of the sweeping robot.

### SUMMARY

According to various embodiments, a sweeping robot is provided.

The sweeping robot includes a robot body and a rag box detachably connected to the robot body. The rag box includes: a box body; two rag rolls detachably connected to the box body, the two rag rolls including a first rag roll and a second rag roll; and a rag having one end wound around the first rag roll, and the other end wound around the second rag roll, wherein after the rag is gradually released from the first rag roll, the rag is wound around the second rag roll; and further comprising a driving member located in the box body and connected to the rag rolls and a control circuit electrically connected to the driving member, wherein the control circuit controls the driving member to drive the rag rolls to rotate synchronously; and further comprising two driving gears, two driven gears, a first rotational stand, and a second rotational stand located in the box body, the two driving gears being connected to the driving member, the two driven gear being fixed to the first rag roll and the second rag roll, respectively, the first rag roll and the second rag roll being rotatably connected to each end of the first rotational stand and the second rotational stand, respectively, one end of the rag being fixed to the first rag roll, the other end of the rag being fixed to the second rag roll after winding around the first rotational stand and the second rotational stand, successively, wherein the first rotational stand and the second stand are rotatable with respect to the box body, such that the two driven gears are engaged or disengaged with the two driving gears, respectively.

In one of the embodiments, a driving member located in the box body and connected to the rag rolls and a control circuit electrically connected to the driving member, wherein the control circuit controls the driving member to drive the rag rolls to rotate synchronously.

In one of the embodiments, two driving gears, two driven gears, a first rotational stand, and a second rotational stand located in the box body, the two driving gears being connected to the driving member, the two driven gear being fixed to the first rag roll and the second rag roll, respectively, the first rag roll and the second rag roll being rotatably connected to each end of the first rotational stand and the second rotational stand, respectively, one end of the rag being fixed to the first rag roll, the other end of the rag being fixed to the second rag roll after winding around the first rotational stand and the second rotational stand, successively, wherein the first rotational stand and the second stand are rotatable with respect to the box body, such that the two driven gears are engaged or disengaged with the two driving gears, respectively.

In one of the embodiments, the rag roll includes: a roll body provided with a first latching slot and a second latching slot on a surface thereof along a circumferential direction thereof; and a pressing piece including a pressing portion, a first positioning post, and a second positioning post, which are located at both sides of the pressing portion, respectively, the first positioning post being detachably received in the first latching slot, the second positioning post being detachably received in the second latching slot, wherein a fixing slot is formed between the pressing piece and the roll body to receive and fix an end of the rag.

In one of the embodiments, a plurality of the first positioning posts are arranged at intervals along an extending direction of the pressing portion.

In one of the embodiments, a first rotational stand and a second rotational stand rotatably connected to the box body, the first rag roll being detachably and rotatably connected to the first rotational stand, the second rag roll being detachably and rotatably connected to the second rotational stand; the box body being provided with a first outlet and a second outlet on opposite sides thereof; wherein the first rotational stand and the second stand rotate relative to the box body, such that the first rag roll and the second are moved out of the box body through the first outlet and the second outlet, respectively.

In one of the embodiments, two driving gears, two driven gears, the two driving gears being connected to the driving member, the two driven gear being fixed to the first rag roll and the second rag roll, respectively, wherein the first rotational stand and the second stand are rotatable with respect to the box body, such that the two driven gears are engaged or disengaged with the two driving gears, respectively.

In one of the embodiments, the first rotational stand and the second rotational stand are each provided with a first hook, the box body is provided with two second hooks and a button connected to the two second hooks, the two second hooks are engaged with two first hooks, the button is triggered to disengage the two second hooks from the two first hooks.

In one of the embodiments, two first elastic members disposed between the first rotational stand and the box body, and between the second rotational stand and the box body, respectively, wherein when the button is triggered to disengage the two second hooks from the two first hooks, the two first elastic members drive the first rotational stand and the second rotational stand to rotate away from each other.

In one of the embodiments, two second elastic members disposed between the box body and the button, respectively, wherein when the button is triggered, the two second elastic members are deformed, and after external force applied to the buttons is removed, the second elastic members drive the button to restore to an initial state.

The sweeping robot according to the embodiments is provided with a detachable rag box, and the rag box can be replaced entirely. Further, during the working process of the sweeping robot, when a certain area is swept, the used rag can be wound around one rag roll, and a clean rag may be pulled out from another rag roll, thus the use of the sweeping robot is convenient.

The details of one or more embodiments are set forth in the accompanying drawings and the description below. Other features, objects, and advantages of the invention will be apparent from the description and drawings, and from the claims.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1a is a front view of a rag according to one embodiment of the present application.
FIG. 1b is a cross-sectional view taken along line A-A of FIG. 1a.
FIG. 2 is a perspective view of a rag wound in a rag roll according to one embodiment of the present application.
FIG. 3a is a perspective structure view of a rag roll according to one embodiment of the present application.
FIG. 3b is a left view of the rag roll of FIG. 3a.
FIG. 4a is a perspective view of the rag roll connection structure.
FIG. 4b is a left view of the rag roll connection structure of FIG. 4a.
FIG. 5 is a perspective view of a rag box according to one embodiment of the present application.
FIG. 6a is a side view of the rag box of FIG. 5 showing rotational stands located in the box body.
FIG. 6b is a side view of the rag box showing the rotational stands stretching out of the box body.
FIG. 6c is a side view of the rag.
FIG. 7 is a bottom view of a sweeping robot according to one embodiment of the present application.

### DETAILED DESCRIPTION OF THE EMBODIMENTS

Embodiments of the invention are described more fully hereinafter with reference to the accompanying drawings. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art. Elements that are identified using the same or similar reference characters refer to the same or similar elements.

It will be understood that when an element is referred to as being "connected" or "coupled" to another element, it can be directly connected or coupled to the other element or intervening elements may be present. In contrast, if an element is referred to as being "directly connected" or "directly coupled" to another element, there are no intervening elements present.

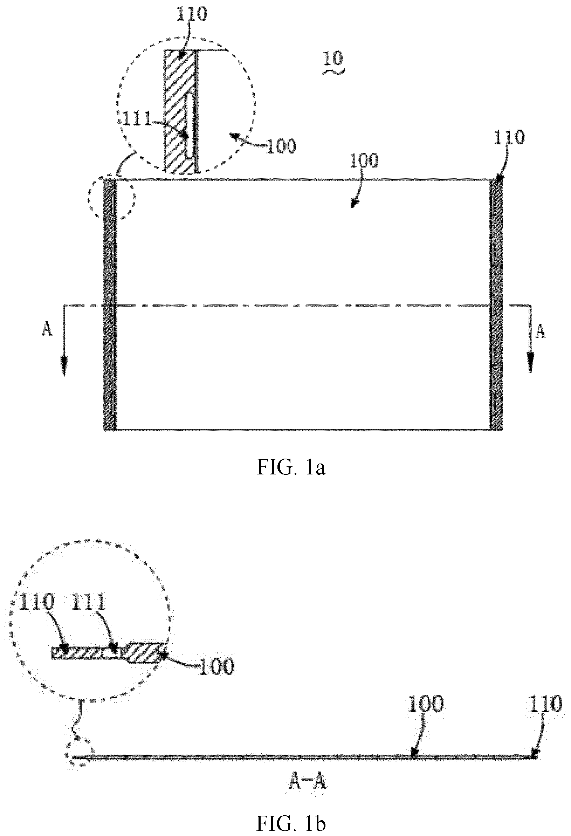

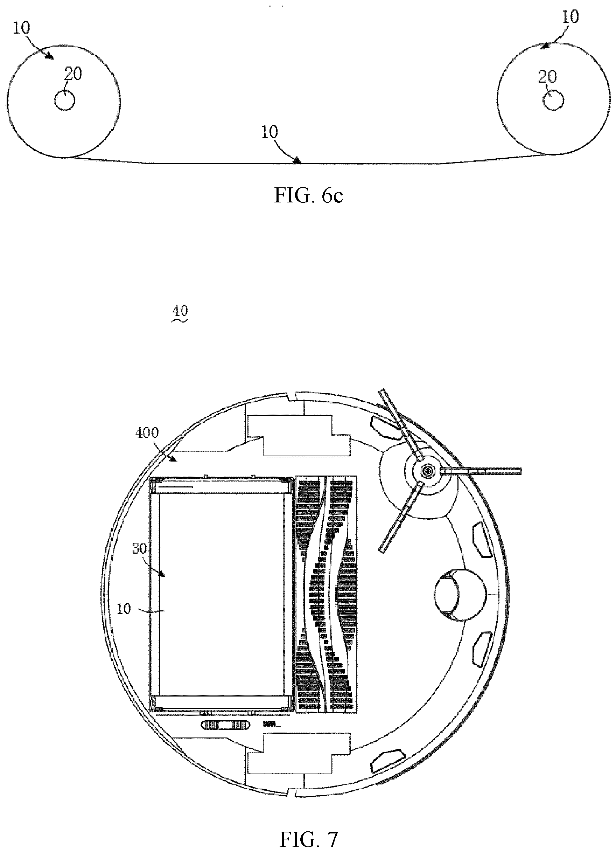

FIG. 1a is a front view of a rag 10 according to one embodiment of the present application, and FIG. 1b is a cross-sectional view taken along line A-A of FIG. 1a. The rag 10 is used to be mounted at a bottom of a sweeping robot 40 (see FIG. 7) to mop the floor. When the sweeping robot 40 sweeps the floor, the function of mopping the floor is synchronously implemented by the rag 10. The rag 10 is detachably connected to the sweeping robot 40. After mopping the floor for a certain period of time, the used rag 10 may be removed from the sweeping robot 40 and replaced by a new one.

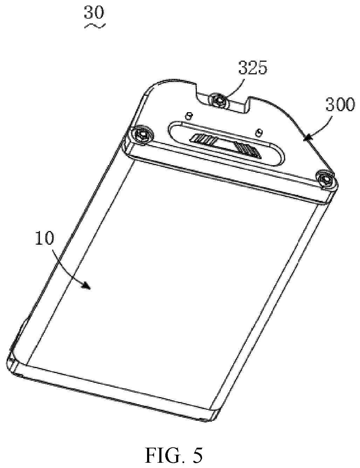

In one of the embodiments, the rag 10 is integrated within a rag box 30, as shown in FIG. 5, which is a perspective view of the rag box 30. The rag box 30 is detachably connected to the sweeping robot 40. When it is necessary to replace the rag 10, the rag box 30 can be integrally removed from the sweeping robot 40, and replaced by a new rag box 30.

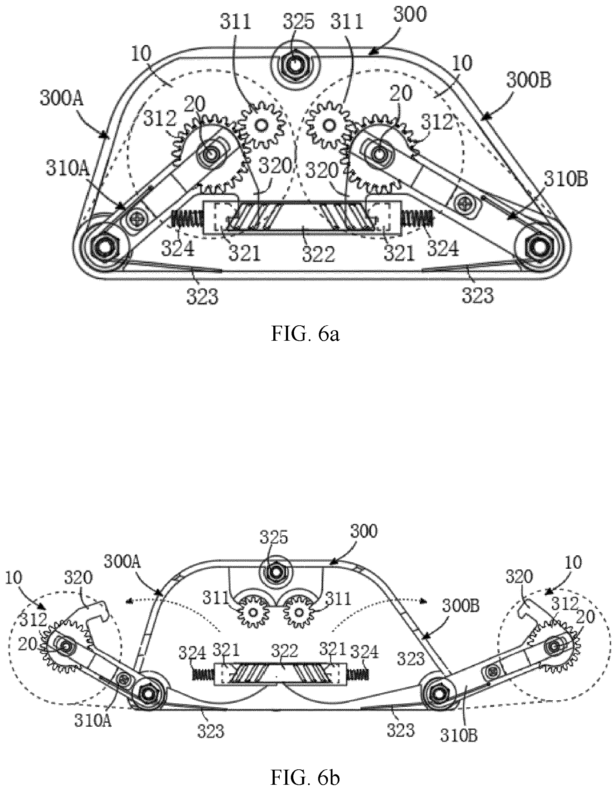

As shown in FIG. 6a, the rag 10 is stored in rolls in the rag box 30. Two rag rolls may be provided in the rag box 30. As shown in FIG. 6c, one of the two rag rolls stores a new rag 10, and the other one stores a used (dirty) rag 10. A portion of the rag 10 between the two rag rolls is used for mopping the floor. When the portion of the rag 10 for mopping the floor becomes dirty, the two rag rolls rotate to retrieve the dirty portion and release a new portion, which can be used to continue to mop the floor. Only after all of the rag 10 in the rag box 30 become dirty, the rag box 30 then is removed from the sweeping robot 40 and replaced by a new one.

As shown in FIGS. 1a and 1b, the rag 10 includes a rag body 100 and two rag heads 110. The rag body 100 is used as a portion for mopping the floor, and the two rag heads 110 are fixing portions. The rag 10 is mounted in the rag box 30 by the two rag heads 110. Since the rag 10 need to be wound in a roll, the rag 10 is in a sheet shape, specifically a thin sheet shape. The rag 10 is made of flexible materials, so that the rag 10 is able to be wound within the rag box 30. In one of the embodiments, the rag body 100 may include an outer layer and an inner layer, both of which are made of liquid absorbent material. The outer layer has a greater tenacity and integrity than that of the inner layer, while the hydroscopicity of the outer layer may be less than that of the inner layer. That is to say, the outer wrap can protect the inner layer, which makes the rag 10 not easily broken when mopping the floor, while the inner layer has a better hydroscopicity. In one embodiment, the outer layer may be made of a nonwoven cloth and the inner layer may be made of a sponge.

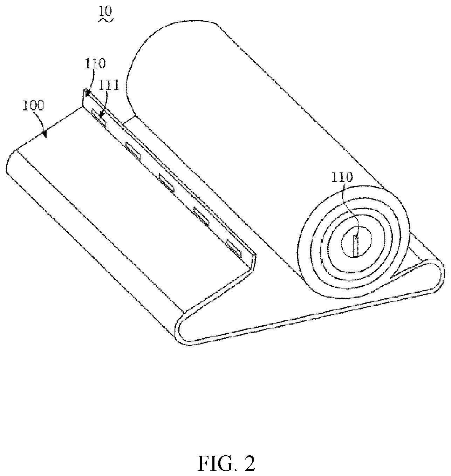

As shown in FIG. 2, the rag body 100 is arranged in a sheet shape and wound along the length direction in a roll shape and stored within the rag box 30. In used, a new rag body 100 is able to be gradually pulled out of the rag roll and wound along the length direction of the rag body 100. After winding, one rag head 110 is located inside the roll-shape structure, while the other rag head 110 is located outside the roll-shape structure.

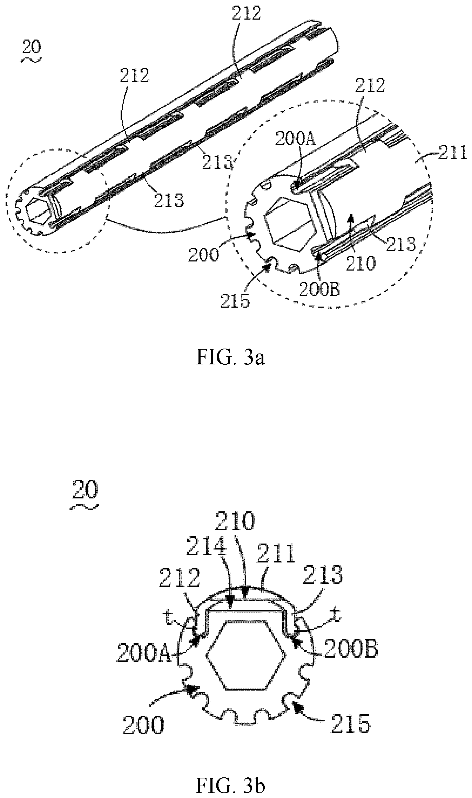

Each of the two rag heads 110 is provided with a plurality of positioning holes 111 respectively for connecting the rag 10 to positioning posts of a rag roll 20. FIG. 3a is a perspective view of the rag roll 20, and FIG. 3b is a left view of the rag roll 20. The rag roll 20 is used to fix the rag 10 which can be wound around the rag roll 20 in a roll shape. The rag roll 20 includes a roll body 200 and a pressing piece 210. The roll body 200 and the pressing piece 210 are detachably connected, the rag head 110 can be clamped between the roll body 200 and the pressing piece 210.

Specifically, as shown in FIGS. 3a and 3b, the roll body 200 is in a long strip shape, and the outer periphery of the roll body 200 is provided with a first latching slot 200A and a second latching slot 200B on a surface thereof along a circumferential direction thereof. The pressing piece 210 includes a pressing portion 211, a first positioning post 212, and a second positioning post 213, which are located at both sides of the pressing portion 211, respectively. The first positioning post 212 can be detachably received in the first latching slot 200A, and the second positioning post 213 can be detachably received in the second latching slot 200B. In other words, the pressing piece 210 is latched with the roll body 200 by the first positioning post 212 and the second positioning post 213, and a fixing slot 214 is formed between the pressing piece 210 and the roll body 200 to receive and fix the rag head 110 of the rag 10.

In one of the embodiments, as shown in FIG. 3a, the roll body 200 is circumferentially provided with a plurality of grooves 215, which can decrease the weight of the roll body 200.

In one of the embodiments, as shown in FIG. 3b, each of distal ends of the first positioning post 212 and the second positioning post 213 respectively forms a protrusion t. The protrusions t of the first positioning post 212 and the second post 213 extend far away from each other. The protrusions t may be received tightly in the corresponding first latching slot 200A and the second latching slot 200B, respectively, such that the pressing piece 210 is latched with the roll body 200. The first positioning post 212 and the second positioning post 213 have a certain elasticity, during disassembly, the protrusions t of the first positioning post 212 and the second positioning post 213 can move towards each other, in this way the first positioning post 212 and the second positioning post 213 may be disengaged from respective corresponding latching slots 200A, 200B.

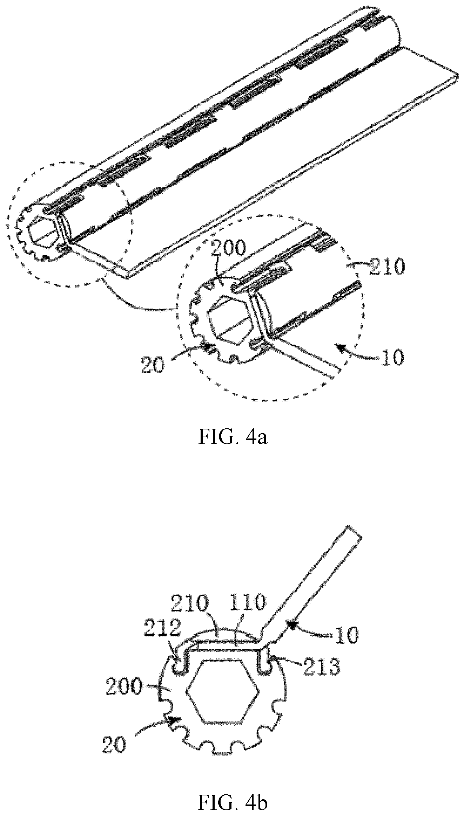

Referring to FIG. 4a and FIG. 4a, the rag head 110 is fixed on the rag roll 20. In conjunction with FIG. 2, the plurality of positioning holes 111 is provided on the rag head 110. The first positioning post 212 or the second positioning post 213 can be fit in the positioning holes 111. In other words, the positioning hole 111 on the rag roll 20 can be connected to any one of the first positioning post 212 and the second positioning post 213, then the rag head 110 can be clamped between the rag roll 20 and the pressing piece 210. Since the rag roll 20 and the pressing piece 210 press the rag head 110 tightly, the rag head 110 is firmly fixed to the rag roll 20. Further, through the fitting of the positioning holes 111 and one of the first positioning post 212 and the second positioning 213, the connection firmness of the rag roll 20 and the rag 10 is enhanced.

Since the positioning hole 111 of the rag head 110 is fit with the positioning post, when the rag head 110 is pulled, the outer periphery of the positioning hole 111 is prone to tearing. In one of the embodiments, in order to increase the strength of the rag roll connection structure, and prevent tearing of the rag 10 at the positioning hole 111, the rag head 110 may be provided with a tear-proof structure, for example, a metal ring disposed at the positioning hole 111. When the positioning post 212 is fit in the positioning hole 111, the positioning post 212 is actually inserted into the metal ring as well, thereby protecting the edge of the positioning hole 111 from being torn. When the rag head 110 is made of nonwoven cloth, a circle of dense lines may be sewn at the edge of the positioning holes 111, using a form of sewing to form a tear-proof structure. In some embodiments, the rag 110 itself may also be made of metal, rubber or the like. Since the rag 10 need to be wound around the rag roll 20, the rag head 110 and the rag body 100 can be flexibly connected.

In one of the embodiments, as shown in FIG. 1a, the rag body 100 includes an outer layer and an inner layer. The outer layer and the two rag heads 110 may be made of nonwoven cloth. In other words, the outer layer may directly extend outward and form the rag heads 110. As shown in FIG. 1b, since the rag body 100 includes the outer layer and the inner layer, and the two rag heads 110 may be formed by the outer layer extending outward, respectively, the thickness of the rag heads 110 may be less than the thickness of the rag body 100. The rag heads 100 may be formed by the outer layer extending outward, so the two rag heads 110 and the rag body 100 may be integrally formed. In some embodiments, the rag heads 110 and the outer layer may be made of nonwoven cloth, while the inner layer may be made of sponge, which is not limited hereto.

As shown in FIGS. 1a and 2, the positioning holes 111 are aligned along the width direction of the rag body 100. As shown in FIG. 3a, the pressing portion 211 of the rag roll 20 is in a long stripe shape, and a plurality of the first positioning posts 212 are arranged at intervals along the extending direction (i.e., the length direction) of the pressing portion 211. Thus, each first positioning post 212 may be connected to one positioning hole 111 in one-to-one correspondence. For another example, a plurality of the second positioning posts 213 are arranged at intervals, along the extending direction of the pressing portion 211. Thus, each first positioning post 212 may be connected to one positioning hole 111 in one-to-one correspondence. It should be noted that, in the rag roll connection structure, if one of the positioning holes 111 on one rag head 110 is connected to the first positioning post 212, all of the positioning holes 111 of the rag head 110 should be connected to the first positioning posts 212; similarly, if one of the positioning holes 111 of one rag head 110 is connected to the second positioning post 213, all of the positioning holes 111 of the rag head 110 should be connected to the second positioning posts 213.

Referring to FIG. 3b, the fixing slot 214 is formed between the pressing piece 210 and the roll body 200 for receiving the rag head 110. Correspondingly, as shown in FIG. 1, the positioning holes 111 are disposed on the rag head 110 adjacent to the rag body 100. When the positioning hole 111 is fit with the first positioning post 212 or the second positioning post 213, the rag head 110 can be received in the fixing slot 214, as to be clamped and fixed by the pressing piece 210 and the roll body 200, thus the connection strength of the rag 10 and the rag roll 20 is improved.

As shown in FIG. 1a, the positioning hole 111 is in a long stripe shape. Specifically, the long-stripe-shape positioning hole 11 extends along a width direction of the rag body 100. The corresponding first positioning post 212 and the second positioning post 213 are also in a long stripe shape. For example, the first positioning post 212 and the second positioning post 213 are both sheet-like structure in a long stripe shape. The shape of the first positioning post 212 and the second positioning post 213 mutually matches the shape of the positioning hole 111, such that after the fitting of the first positioning post 212 and the second positioning post 213, the rag 10 and the rag roll 20 will not waggle from each other, to increase the stability of the connection.

In one of the embodiments, as shown in FIG. 3b, the first positioning post 212 and the second positioning post 213 are formed from bending of the pressing portion 211, that is to say, a certain bending angle is formed between the first positioning post 212 and the pressing portion 211, and a certain bending angle is also formed between the second positioning post 213 and the pressing portion 211. For example, the bended portion of the first positioning post 212 and the second positioning post 213 with respect to the pressing portion 211 may be substantially parallel, thus facilitating to insert the first positioning post 212 into the first latching slot 200A, or to insert the second positioning post 213 into the second latching slot 200B.

As shown in FIG. 5 and FIG. 6, the rag box 30 includes a box body 300 having a substantially trapezoidal cross-section, which is short on the upper side, and long on the lower side. A first outlet 300A and a second outlet 300B are respectively formed at the left and right sides of the box body 300. One end of the rag 10 is able to stretch out of a box body 300 from the first outlet 300A, then go down around the bottom of the box body 300, and return to the box body 300 from the second outlet 300B. The rag box 30 further includes a first rotational stand 310A and a second rotational stand 310B, which are rotationally connected to the box body 300. Referring to FIGS. 6a and 6b, the first rotational stand 310A is located at the left half of the box body 300, and the second rotational stand 310B is located at the right half of the box body 300. One of the two rag rolls 20 is detachably connected to the first rotational stand 310A, and the other is detachably connected to the second rotational stand 310B. The detachable connection described above thereof is for being enable the rag roll 20 to be detached from the corresponding rotational stand, and to be replaced conveniently.

Further, one end of the rag 10 is fixed to one of the rag rolls 20, the other end of the rag 10 goes around the bottom of the box body 300 and is fixed to another rag roll 20. For example, one end of the rag 10 is connected to the rag roll 20 on the first rotational stand 310A, and the other end of the rage 10 is connected to the rag roll 20 on the second stand 310B. After gradually being released from one of the rag roll 20, the rag 10 may be wound around the other rag roll 20. For example, as shown in FIG. 6a, the rag 10 wound around the rag roll 20 on the first rotational stand 310A is unused (i,e., not mopping the floor). The rag 10 is wound downward around the bottom of the box body 300, then wounded on the rag roll 20 of the second rotational stand 310B. After mopping the floor, the rag 10 at the bottom of the box body 300 becomes dirty, then it is wound around the rag roll 20 of the second rotational stand 310B, so that the clean rag 10 on the first rotational stand 310A is capable to move to the bottom of the box body 300, and the mopping can be continued. As shown in FIG. 6b, the first rotational stand 310A and the second rotational stand 310B can rotate with respect to the box body 300, so as to rotate the respective corresponding rag roll 20 out of the box body 300 through the first outlet 300A and the second outlet 300B, respectively. Since the rag roll 20 is detachably connected to the rotational stand, when the rotational stands 310A and 310B are rotated out of the outlet, a new rag 10 can be loaded.

In one of the embodiments, as shown in FIG. 6a, two driving gears 311, two driven gears 312 are provided in the box body 300. The two driving gears 311 are connected to an external driving member (not shown), the two driven gear 312 are fixed to the first rag roll 20 and the second rag roll 20, respectively. When the first rotational stand 310A and the second rotational stand 310B rotate with respect to the box body 300, the two driven gears 312 are engaged or disengaged with the two driving gears 311, respectively. In the process from FIG. 6a to FIG. 6b, the first rotational stand 310A and the second rotational stand 310B can rotate away from each other towards both sides of the box body 300, respectively, such that the driven gear 312 fixed to the rag roll 20 on the first rotational stand 310A is disengaged from the diving gear 311 in the box body 300, and the driven gear 312 fixed to the rag roll 20 on the second rotational stand 310B is also disengaged from the driving gear 311 in the box body 300. In the process from FIG. 6b to FIG. 6a, the driven gear 312 fixed to the rag roll 20 on the first rotational stand 310A is re-engaged with the driving gear 311 in the box body 300, and the driven gear 312 fixed to the rag roll 20 on the second rotational stand 310B is also re-engaged with the driving gear 311 in the box body 300. The external driving member may be a motor that drives the driving gear 311 to rotate, which can realize the automatical rolling-up of the dirty rag 10, and to move the clean rag 10 to the bottom of the rag box 30. Referring to FIGS. 6b and 6c, after the first rotational stand 310A and the second rotational stand 310B are rotated out of the box 300, the rag 10 and the rag roll 20 in FIG. 6c may be removed, then a new rag roll 20 or rag 10 is loaded.

In one of the embodiments, further referring to FIGS. 6a and FIG. 6b, the first rotational stand 310A and the second rotational stand 310B are each provided with a first hook 320. The box body 300 is provided with two second hooks 321 and a button 322 interconnecting the two second hooks 321. The two second hooks 321 can be engaged with two first hooks 320, respectively. The button 322 is triggered to disengage the two second hooks 321 from the two first hooks 320. For example, in the state shown in FIG. 6a, a pair of the first hooks 320 and the second hooks 321 are engaged, respectively, so that neither the first rotational stands 310A nor the second rotational stands 310B can rotate with respect to the box body 300. By this time, the two second hooks 321 can be moved by operating the button 322 to the right or to the left, thus disengaging the second hook 321 and the first hook 320. Then both the first rotational stand 310A and the second rotational stand 310B are rotatable with respect to the box body 300. Similarly, after returning from FIG. 6b to FIG. 6a, the first hook 320 and the first hook 321 can be engaged again.

In one of the embodiments, further referring to FIGS. 6a and FIG. 6b, two first elastic members 323 are disposed between the first rotational stand 310 A and the box body 300, and between the second rotational stand 310B and the box body 300, respectively. When the button 322 is triggered to disengage the two second hooks 321 from the two first hooks 320, the two first elastic members 323 drive the first rotational stand 310 A and the second rotational stand 310B to rotate away from each other. For example, the first elastic member 323 can be a torsional spring, one end of which is connected to the box body 300, and the other end of which is connected to the first rotational stand 310A or the second rotational stand 310B. When the button 322 is triggered to disengage the two second hooks 321 from the two first hooks 320, the two first elastic members 323 drive the first rotational stand 310A and the second rotational stand 310B to rotate away from each other. The elastic force provided by the first elastic member 323 is able to drive the first rotational stand 310A to rotate out of the box 300, or to drive the second rotational stand 310B to rotate out of the box body 300.

Further referring to FIGS. 6a and FIG. 6b, two second elastic members 323 are disposed at both ends of the button 322. When the button 322 is moved towards one of the two second hooks 321 by an external force, the two second elastic members 323 are deformed, and after the external force applied to the button 322 is removed, the second elastic members 323 drive the button 322 to restore to an initial state. For example, the initial state of the button 322 is the state shown in FIG. 6a and FIG.6b, and the two second elastic members 324 are located on the left and the right sides of the button 322, respectively. The button 322 can slide leftward or rightward with respect to the box body 300. For example, when the button 322 slides leftward, the second elastic member 324 on the left side is compressed, while the second elastic member 324 on the right side is stretched, the first hook 320 on the first rotational stand 310A is disengaged from the second hook 321 on the left side, and the first elastic member 323 on the left side is able to rotate the first rotational stand 310A out of the box body 300. Similarly, when the button 322 slides rightward with respect to the box body 300, the second elastic member 324 on the right side is compressed, while the second elastic member 324 on the left side is stretched, the first hook 320 on the second rotational stand 310B is disengaged from the second hook 321 on the right side, and the first elastic member 323 on the right side is able to rotate the second rotational stand 310B out of the box body 300. After the external force applied on the button 322 is removed, the left and right two second elastic members 324 are capable to restore the button 322 to the initial state located in the middle.

As shown in FIG. 7, the sweeping robot 40 includes a robot body 400 and the rag box 30 detachably connected to the robot body 400. For example, the rag box 30 is detachably connected to the robot body 400 in the way of latching engagement. Referring to FIGS. 5 and 6a, a support shaft 325 is provided at the upper portion of the box body 300 of the rag box 30, and the end of the support shaft 325 protrudes from the box body 300. The robot body 400 is provided with a latching engagement structure, which may latch and engage the support shaft 325 on the box body 300. In one of the embodiments, the sweeping robot 40 includes the driving member and a control circuit. The control circuit may include a CPU, and the driving member may be a motor. The driving member is electrically connected to the control circuit, which may control the rotation of the driving member. For example, the control circuit controls the driving member to drive the rotation of the rag roll 20 in the rag box 30, and then the rag 10 is gradually released from one of the rag rolls 20 and wound around the other rag roll 20. For example, a time threshold may be set, after the sweeping robot 40 operates for the time threshold, the process of replacing the rag 10 mentioned above is automatically started.

The respective technical features of the above-described embodiments may be combined arbitrarily. For the sake of brevity of the description, all possible combinations of the respective technical features in the above-described embodiments, are not described. However, as long as the combinations of these technical features are not contradictory, all that should be deemed to be within the scope of the present specification recorded.

The above-described examples represent only a few embodiments of the present disclosure, the description of which is more specific and detailed, however, it cannot be therefore understood as limiting the scope of the disclosure patent. It should be noted that, for a person of ordinary skill in the art, under the premise that without departing from the inventive concept, various deformations and improvements may also be made, all of which fall within the protective scope of the present disclosure. Thus, the protective scope of the present disclosure patent shall be subject to the appended claims.

## Claims

1. A sweeping robot (40), comprising:
a robot body (400); and
a rag box (30) detachably connected to the robot body (400), the rag box (30)comprising:
a box body (300);
two rag rolls (20) detachably connected to the box body (300), the two rag rolls (20) comprising a first rag roll (20) and a second rag roll; and
a rag (10) having one end wound around the first rag roll (20), and the other end wound around the second rag roll (20), wherein after the rag (10) is gradually released from the first rag roll (20), the rag is wound around the second rag roll (20); and
comprising a driving member located in the box body (300) and connected to the rag rolls (20) and a control circuit electrically connected to the driving member, wherein the control circuit controls the driving member to drive the rag rolls (20) to rotate synchronously, and **characterized in that**
the sweeping robot (40) comprises two driving gears (311), two driven gears (312), a first rotational stand (310A), and a second rotational stand (310B) located in the box body (300), the two driving gears (311) being connected to the driving member, the two driven gear (312) being fixed to the first rag roll (20) and the second rag roll (20), respectively, the first rag roll (20) and the second rag roll (20) being rotatably connected to each end of the first rotational stand (310A) and the second rotational stand (310B), respectively, one end of the rag (10) being fixed to the first rag roll (20), the other end of the rag (10) being fixed to the second rag roll (20) after winding around the first rotational stand (310A) and the second rotational stand (310B), successively, wherein the first rotational stand (310A) and the second stand (310B) are rotatable with respect to the box body (300), such that the two driven gears (312) are engaged or disengaged with the two driving gears (311), respectively.

2. The sweeping robot (40) according to any one of claim 1, wherein the rag roll (20) comprises:
a roll body (200) provided with a first latching slot (200A) and a second latching slot (200B) on a surface thereof along a circumferential direction thereof; and
a pressing piece (210) comprising a pressing portion (211), a first positioning post (212), and a second positioning post (213), which are located at both sides of the pressing portion (211), respectively, the first positioning post (212) being detachably received in the first latching slot (200A), the second positioning post (213) being detachably received in the second latching slot (200B), wherein a fixing slot (214) is formed between the pressing piece (210) and the roll body (200) to receive and fix an end of the rag (10).

3. The sweeping robot (40) according to any one of claim 1 or 2, wherein a plurality of the first positioning posts (212) is arranged at intervals along an extending direction of the pressing portion (211).

4. The sweeping robot (40) according to any one of claims 1 to 3, further comprising a first rotational stand (310A) and a second rotational stand (310B) rotatably connected to the box body (300), the first rag roll (20) being detachably and rotatably connected to the first rotational stand (310A), the second rag roll being detachably and rotatably connected to the second rotational stand (310B), the box body (300) being provided with a first outlet (300A) and a second outlet (300B) on opposite sides thereof;
wherein the first rotational stand (310A) and the second stand (310B) are rotatable with respect to the box body (300), such that the first rag roll (20) and the second (20) are moved out of the box body (300) through the first outlet (300A) and the second outlet (300B), respectively.

5. The sweeping robot (40) according to any one of claims 1 to 4, further comprising two driving gears (311), two driven gears (312), the two driving gears (311) being connected to the driving member, the two driven gear (312) being fixed to the first rag roll (20) and the second rag roll (20), respectively, wherein the first rotational stand (310A) and the second rotational stand (310B) are rotatable with respect to the box body (300), such that the two driven gears (312) are engaged or disengaged with the two driving gears (311), respectively.

6. The sweeping robot (40) according to any one of claims 1 to 5, wherein the first rotational stand (310A) and the second rotational stand (310B) are each provided with a first hook (320), the box body (300) is provided with two second hooks (321) and a button (322) connected to the two second hooks (321), the two second hooks (321) are engaged with two first hooks (320), respectively, the button (322) is triggered to disengage the two second hooks (321) from the two first hooks (320).

7. The sweeping robot (40) according to any one of claims 1 to 6, further comprising two first elastic members (323) disposed between the first rotational stand (310A) and the box body (300), and between the second rotational stand (310B) and the box body (300), respectively, wherein when the button (322) is triggered to disengage the two second hooks (321) from the two first hooks (320), the two first elastic members (323) drive the first rotational stand (310A) and the second rotational stand (310B) to rotate away from each other.

8. The sweeping robot (40) according to any one of claims 1 to 7, further comprising two second elastic members (323) disposed at both ends of the button (322), wherein when the button (322) is moved towards one of the two second hooks (321) by an external force, the two second elastic members (323) are deformed, and after the external force applied to the button (322) is removed, the second elastic members (323) drive the button (322) to restore to an initial state.

## Patentansprüche

1. Wischroboter (40), umfassend:
einen Roboterkörper (400); und
einen Lappenkasten (30), der abnehmbar mit dem Roboterkörper (400) verbunden ist, wobei der Lappenkasten (30) umfasst:
einen Kastenkörper (300);
zwei Lappenrollen (20), die abnehmbar mit dem Kastenkörper (300) verbunden sind, wobei die zwei Lappenrollen (20) eine erste Lappenrolle (20) und eine zweite Lappenrolle umfassen; und
einen Lappen (10), dessen eines Ende um die erste Lappenrolle (20) gewickelt ist und dessen anderes Ende um die zweite Lappenrolle (20) gewickelt ist, wobei, nachdem der Lappen (10) schrittweise von der ersten Lappenrolle (20) freigegeben ist, der Lappen um die zweite Lappenrolle (20) gewickelt wird; und
umfassend ein Antriebselement, das in dem Kastenkörper (300) angeordnet und mit den Lappenrollen (20) verbunden ist, und eine Steuerschaltung, die elektrisch mit dem Antriebselement verbunden ist, wobei die Steuerschaltung das Antriebselement steuert, um die Lappenrollen (20) so anzutreiben, dass sie sich synchron drehen, und **dadurch gekennzeichnet, dass**
der Wischroboter (40) zwei Antriebszahnräder (311), zwei angetriebene Zahnräder (312), ein erstes Drehgestell (310A) und ein zweites Drehgestell (310B), die in dem Kastenkörper (300) angeordnet sind, umfasst, wobei die zwei Antriebszahnräder (311) mit dem Antriebselement verbunden sind, wobei die zwei angetriebenen Zahnräder (312) an der ersten Lappenrolle (20) bzw. der zweiten Lappenrolle (20) fixiert sind, wobei die erste Lappenrolle (20) und die zweite Lappenrolle (20) mit jedem Ende des ersten Drehgestells (310A) bzw. des zweiten Drehgestells (310B) drehbar verbunden sind, wobei ein Ende des Lappens (10) an der ersten Lappenrolle (20) fixiert ist, wobei das andere Ende des Lappens (10) nach Wickeln um das erste Drehgestell (310A) und das zweite Drehgestell (310B) an der zweiten Lappenrolle (20) sukzessive fixiert sind, wobei das erste Drehgestell (310A) und das zweite Drehgestell (310B) in Bezug auf den Kastenkörper (300) derart drehbar sind, dass die zwei angetriebenen Zahnräder (312) mit den zwei Antriebszahnrädern (311) in Eingriff kommen bzw. aus dem Eingriff damit gelöst werden.

2. Wischroboter (40) nach einem von Anspruch 1, wobei die Lappenrolle (20) umfasst:
einen Rollenkörper (200), der mit einer ersten Rastnut (200A) und einer zweiten Rastnut (200B) auf einer Oberfläche davon entlang einer Umfangsrichtung davon versehen ist; und
ein Druckstück (210), das einen Druckabschnitt (211), einen ersten Positionierungsstift (212) und einen zweiten Positionierungsstift (213) umfasst, die jeweils auf beiden Seiten des Druckabschnitts (211) angeordnet sind, wobei der erste Positionierungsstift (212) abnehmbar in der ersten Rastnut (200A) aufgenommen ist, wobei der zweite Positionierungsstift (213) abnehmbar in der zweiten Rastnut (200B) aufgenommen ist, wobei eine Fixierungsnut (214) zwischen dem Druckstück (210) und dem Rollenkörper (200) ausgebildet ist, um ein Ende des Lappens (10) aufzunehmen und zu fixieren.

3. Wischroboter (40) nach einem der Ansprüche 1 oder 2, wobei eine Mehrzahl der ersten Positionierungsstifte (212) in Intervallen entlang einer Erstreckungsrichtung des Druckabschnitts (211) angeordnet ist.

4. Wischroboter (40) nach einem der Ansprüche 1 bis 3, ferner umfassend ein erstes Drehgestell (310A) und ein zweites Drehgestell (310B), die drehbar mit dem Kastenkörper (300) verbunden sind, wobei die erste Lappenrolle (20) abnehmbar und drehbar mit dem ersten Drehgestell (310A) verbunden ist, wobei die zweite Lappenrolle abnehmbar und drehbar mit dem zweiten Drehgestell (310B) verbunden ist, wobei der Kastenkörper (300) mit einem ersten Auslass (300A) und einem zweiten Auslass (300B) auf gegenüberliegenden Seiten davon versehen ist;
wobei das erste Drehgestell (310A) und das zweite Drehgestell (310B) in Bezug auf den Kastenkörper (300) derart drehbar sind, dass die erste Lappenrolle (20) und die zweite (20) durch den ersten Auslass (300A) bzw. den zweiten Auslass (300B) aus dem Kastenkörper (300) bewegt werden.

5. Wischroboter (40) nach einem der Ansprüche 1 bis 4, ferner umfassend zwei Antriebszahnräder (311), zwei angetriebene Zahnräder (312), wobei die zwei Antriebszahnräder (311) mit dem Antriebselement verbunden sind, wobei die zwei angetriebenen Zahnräder (312) an der ersten Lappenrolle (20) bzw. der zweiten Lappenrolle (20) fixiert sind, wobei das erste Drehgestell (310A) und das zweite Drehgestell (310B) in Bezug auf den Kastenkörper (300) derart drehbar sind, dass die zwei angetriebenen Zahnräder (312) mit den zwei Antriebszahnrädern (311) in Eingriff kommen bzw. aus dem Eingriff gelöst damit werden.

6. Wischroboter (40) nach einem der Ansprüche 1 bis 5, wobei das erste Drehgestell (310A) und das zweite Drehgestell (310B) jeweils mit einem ersten Haken (320) versehen sind, wobei der Kastenkörper (300) mit zwei zweiten Haken (321) und einer mit den zwei zweiten Haken (321) verbundenen Taste (322) versehen ist, wobei die zwei zweiten Haken (321) jeweils mit zwei ersten Haken (320) in Eingriff kommen, wobei die Taste (322) ausgelöst wird, um die zwei zweiten Haken (321) aus dem Eingriff mit den zwei ersten Haken (320) zu lösen.

7. Wischroboter (40) nach einem der Ansprüche 1 bis 6, ferner umfassend zwei erste elastische Elemente (323), die zwischen dem ersten Drehgestell (310A) und dem Kastenkörper (300) bzw. zwischen dem zweiten Drehgestell (310B) und dem Kastenkörper (300) angeordnet sind, wobei, wenn die Taste (322) ausgelöst wird, um die zwei zweiten Haken (321) aus dem Eingriff mit den zwei ersten Haken (320) zu lösen, die zwei ersten elastischen Elemente (323) das erste Drehgestell (310A) und das zweite Drehgestell (310B) derart antreiben, dass sie sich voneinander weg drehen.

8. Wischroboter (40) nach einem der Ansprüche 1 bis 7, ferner umfassend zwei zweite elastische Elemente (323), die an beiden Enden der Taste (322) angeordnet sind, wobei, wenn die Taste (322) durch eine externe Kraft hin zu einem der zwei zweiten Haken (321) bewegt wird, die zwei zweiten elastischen Elemente (323) verformt werden, und nachdem die auf die Taste (322) aufgebrachte externe Kraft entfernt wird, die zweiten elastischen Elemente (323) die Taste (322) derart antreiben, dass ein anfänglicher Zustand wiederhergestellt wird.

## Revendications

1. Robot de balayage (40), comprenant :
un corps de robot (400) ; et
une boîte à chiffon (30) reliée de façon détachable au corps de robot (400), la boîte à chiffon (30) comprenant :
un corps de boîte (300) ;
deux rouleaux de chiffon (20) reliés de façon détachable au corps de boîte (300), les deux rouleaux de chiffon (20) comprenant un premier rouleau de chiffon (20) et un second rouleau de chiffon ; et
un chiffon (10) ayant une extrémité enroulée autour du premier rouleau de chiffon (20), et l'autre extrémité enroulée autour du second rouleau de chiffon (20), dans lequel après que le chiffon (10) est progressivement libéré du premier rouleau de chiffon (20), le chiffon est enroulé autour du second rouleau de chiffon (20) ; et
comprenant un organe d'entraînement situé dans le corps de boîte (300) et relié aux rouleaux de chiffon (20) et un circuit de commande connecté électriquement à l'organe d'entraînement, dans lequel le circuit de commande commande l'organe d'entraînement pour entraîner les rouleaux de chiffon (20) en rotation synchrone, et **caractérisé en ce que**
le robot de balayage (40) comprend deux engrenages menants (311), deux engrenages menés (312), un premier support rotatif (310A), et un second support rotatif (310B) situés dans le corps de boîte (300), les deux engrenages menants (311) étant reliés à l'organe d'entraînement, les deux engrenages menés (312) étant fixés respectivement sur le premier rouleau de chiffon (20) et le second rouleau de chiffon (20), le premier rouleau de chiffon (20) et le second rouleau de chiffon (20) étant reliés en rotation à chaque extrémité du premier support rotatif (310A) et du second support rotatif (310B), respectivement, une extrémité du chiffon (10) étant fixée au premier rouleau de chiffon (20), l'autre extrémité du chiffon (10) étant fixée au second rouleau de chiffon (20) après enroulement autour du premier support rotatif (310A) et du second support rotatif (310B) successivement, dans lequel le premier support rotatif (310A) et le second support rotatif (310B) peuvent tourner par rapport au corps de boîte (300), de façon à mettre en prise ou découpler les deux engrenages menés (312) avec ou des deux engrenages menants (311), respectivement.

2. Robot de balayage (40) selon la revendication 1, dans lequel le rouleau de chiffon (20) comprend :
un corps de rouleau (200) muni d'une première fente de verrouillage (200A) et d'une seconde fente de verrouillage (200B) sur une surface de celui-ci dans une direction circonférentielle ; et
une pièce de pression (210) comprenant une partie de pression (211), un premier montant de positionnement (212), et un second montant de positionnement (213), qui sont situés respectivement sur les deux côtés de la partie de pression (211), le premier montant de positionnement (212) étant reçu de façon détachable dans la première fente de verrouillage (200A), le second montant de positionnement (213) étant reçu de façon détachable dans la seconde fente de verrouillage (200B), dans lequel une fente de fixation (214) est formée entre la pièce de pression (210) et le corps de rouleau (200) pour recevoir et fixer une extrémité du chiffon (10).

3. Robot de balayage (40) selon l'une quelconque des revendications 1 ou 2, dans lequel une pluralité des premiers montants de verrouillage (212) sont disposés à des intervalles dans une direction d'extension de la partie de pression (211).

4. Robot de balayage (40) selon l'une quelconque des revendications 1 à 3, comprenant en outre un premier support rotatif (310A) et un second support rotatif (310B) reliés en rotation au corps de boîte (300), le premier rouleau de chiffon (20) étant relié en rotation et de façon détachable au premier support rotatif (310A), le second rouleau de chiffon étant relié en rotation et de façon détachable au second support rotatif (310B), le corps de boîte (300) étant muni d'une première sortie (300A) et d'une seconde sortie (300B) sur ses côtés opposés ;
dans lequel le premier support rotatif (310A) et le second support (310B) peuvent tourner par rapport au corps de boîte (300), de façon à déplacer le premier rouleau de chiffon (20) et le second rouleau de chiffon (20) hors du corps de boîte (300) par la première sortie (300A) et la seconde sortie (300B), respectivement.

5. Robot de balayage (40) selon l'une quelconque des revendications 1 à 4, comprenant en outre deux engrenages menants (311), deux engrenages menés (312), les deux engrenages menants (311) étant reliés à l'organe de commande, les deux engrenages menés (312) étant fixés respectivement sur le premier rouleau de chiffon (20) et le second rouleau de chiffon (20), dans lequel le premier support rotatif (310A) et le second support rotatif (310B) peuvent tourner par rapport au corps de boîte (300), de façon à mettre en prise ou découpler les deux engrenages menés (312) avec ou des deux engrenages menants (311), respectivement.

6. Robot de balayage (40) selon l'une quelconque des revendications 1 à 5, dans lequel le premier support rotatif (310A) et le second support rotatif (310B) sont munis chacun d'un premier crochet (320), le corps de boîte (300) est muni de deux seconds crochets (321) et d'un bouton (322) relié aux deux seconds crochets (321), les deux seconds crochets (321) sont en prise respectivement avec deux premiers crochets (320), le bouton (322) est déclenché pour découpler les deux seconds crochets (321) des deux premiers crochets (320).

7. Robot de balayage (40) selon l'une quelconque des revendications 1 à 6, comprenant en outre deux premiers organes élastiques (323) disposés respectivement entre le premier support rotatif (310A) et le corps de boîte (300), et entre le second support rotatif (310B) et le corps de boîte (300), dans lequel lorsque le bouton (322) est déclenché pour découpler les deux seconds crochets (321) des deux premiers crochets (320), les deux premiers organes élastiques (323) entraînent le premier support rotatif (310A) et le second support rotatif (310B) en rotation à distance l'un de l'autre.

8. Robot de balayage (40) selon l'une quelconque des revendications 1 à 7, comprenant en outre deux seconds organes élastiques (323) disposés aux deux extrémités du bouton (322), dans lequel lorsque le bouton (322) est déplacé vers l'un des deux seconds crochets (321) par une force externe, les deux seconds organes élastiques (323) sont déformés, et après le retrait de la force externe appliquée au bouton (322), les seconds organes élastiques (323) entraînent le bouton (322) pour qu'il retrouve un état initial.
